Europäisches Patentamt

European Patent Office

Office européen des brevets

(19)

(11) Numéro de publication : **0 370 848 B1**

(12) **FASCICULE DE BREVET EUROPEEN**

(45) Date de publication du fascicule du brevet :
**12.08.92 Bulletin 92/33**

(51) Int. Cl.$^5$ : **G01N 27/12**

(21) Numéro de dépôt : **89403006.3**

(22) Date de dépôt : **31.10.89**

(54) **Nitrure et oxynitrures de gallium utiles comme détecteurs sélectifs de gaz réducteurs dans l'atmosphère, procédé pour leur préparation, et dispositif de détection les contenant.**

(30) Priorité : **02.11.88 FR 8814270**

(43) Date de publication de la demande :
**30.05.90 Bulletin 90/22**

(45) Mention de la délivrance du brevet :
**12.08.92 Bulletin 92/33**

(84) Etats contractants désignés :
**DE GB IT**

(56) Documents cités :
**EP-A- 0 201 375**

(73) Titulaire : **CENTRE NATIONAL DE LA
RECHERCHE SCIENTIFIQUE (CNRS)
15, Quai Anatole France
F-75700 Paris Cedex 07 (FR)**
Titulaire : **UNIVERSITE DE RENNES I
2, rue du Thabor
F-35000 Rennes (FR)**

(72) Inventeur : **Merdrignac, Odile
7. rue du Jeu de Paume
F-22400 Lamballe (FR)**
Inventeur : **Guyader, Jean
Le Monthelon
F -35690 Acigne (FR)**
Inventeur : **Verdier, Patrick
La Perlais
F -35690 Acigne (FR)**
Inventeur : **Colin, Yves
20, rue Beaumanoir Thorigné-Fouillard
F-35510 Cesson-Sevigne (FR)**
Inventeur : **Laurent, Yves
Les Landes de Billé Thorigné-Fouillard
F-35510 Cesson-Sevigne (FR)**

(74) Mandataire : **Warcoin, Jacques et al
Cabinet Régimbeau 26, avenue Kléber
F-75116 Paris (FR)**

EP 0 370 848 B1

## Description

La présente invention concerne le nitrure et les oxynitrures de gallium utiles comme détecteurs sélectifs de gaz réducteurs azotés dans l'atmosphère, en particulier d'ammoniac et de gaz contenant des groupements NH et/ou $NH_2$, leur procédé de préparation, ainsi que des dispositifs de détection sélective contenant lesdits nitrure et oxynitrures.

Dans la technique antérieure, la plupart des capteurs de gaz utilisant comme paramètre de détection la résistance électrique d'une couche semiconductrice mettent en oeuvre des oxydes plus ou moins dopés, tels que $SnO_2$ ou ZnO, qui sont relativement sensibles à différents gaz réducteurs. Cependant, aucun d'entre eux, quel que soit le phénomène physicochimique sur lequel repose son fonctionnement, n'est particulièrement sélectif pour les gaz réducteurs azotés et en particulier pour l'ammoniac, avec une fiabilité souhaitable. Tous ces capteurs présentent des qualités moyennes de sensibilité, sélectivité et fidélité ; ils exigent en outre une importante maintenance. Il est absolument impossible de les utiliser efficacement en tant que capteurs sélectifs par exemple d'ammoniac.

Il a ensuite été préconisé d'utiliser, à titre de tels capteurs sélectifs, des nitrures et oxynitrures doubles, en particulier des composés répondant à la formule générale $Zn_tGe_uO_vN_w$ (voir EP-A-0 201 375).

Ces nitrures et oxynitrures doubles présentent cependant certains inconvénients qui, dans la pratique, rendent leur utilisation difficile en tant que capteurs sélectifs de gaz réducteurs azotés.

Tout d'abord, ces composés antérieurs présentent des résistances très élevées, de l'ordre de $10^9$ $\Omega$, ce qui nécessite l'utilisation de dispositifs de mesure de résistance ayant une conception assez sophistiquée et un encombrement relativement important.

Par ailleurs, ces composés présentent d'importantes variations de leur résistance électrique en fonction de la température. Ceci nécessite l'utilisation de dispositifs très précis de régulation de la température d'utilisation, pour obtenir des mesures fiables.

La présente invention a précisément eu pour but d'écarter ces inconvénients et, par conséquent, de trouver d'autres composés semi-conducteurs qui sont plus stables en fonction de la température, notamment en présence d'ammoniac ou d'humidité, tout en restant parfaitement aptes à adsorber de l'oxygène de façon à favoriser la détection de gaz réducteurs azotés et plus spécifiquement de l'ammoniac.

Conformément à la présente invention, on utilisera, à titre de détecteurs sélectifs de gaz réducteurs azotés dans l'atmosphère, en particulier d'ammoniac et de gaz contenant des groupements NH et/ou $NH_2$, les nitrure et oxynitrures de gallium à structure tétraédrique répondant à la formule générale :

$$Ga_{1-\frac{x}{3}} \quad \square_{\frac{x}{3}} \quad N_{1-x} \quad O_x$$

dans laquelle :

$\square$ représente une lacune, et $0 \leqq x \leqq 0,3$

Etant donné que ces nitrure et oxynitrures de gallium fabriqués sous ammoniac et sont physiquement très stables aux températures usuelles, ils présentent l'avantage déterminant de ne pas réagir directement avec l'ammoniac à ces températures. En revanche, l'oxygène de l'air qu'ils adsorbent par un phénomène de chimisorption forte, réagit de façon réversible avec les gaz réducteurs azotés tels que l'ammoniac dans un domaine de températures qui dépend en particulier des conditions de préparation influençant la stoechiométrie des composés selon l'invention.

Les nitrure et oxynitrures de gallium selon l'invention peuvent être avantageusement préparés par la réaction d'un oxyde de gallium avec de l'ammoniac à une température supérieure à environ 550°C.

Le nitrure de gallium GaN est avantageusement obtenu par réaction de l'oxyde de gallium $Ga_2O_3$ avec de l'ammoniac à une température s'échelonnant environ entre 550°C et 900°C.

Le nitrure de gallium est facilement séparé du milieu réactionnel.

Il convient de noter ici qu'en opérant à une température de l'ordre de 850 à 900°C, en présence d'un débit gazeux de 10 litres/heure environ d'ammoniac, on observe une cinétique très rapide de réaction.

Pour préparer les oxynitrures de gallium, on fait réagir un gallate avec de l'ammoniac à une température sensiblement comprise entre 550 et 650°C, et l'on sépare du milieu réactionnel l'oxynitrure ainsi obtenu. Une telle séparation s'effectue dans d'excellentes conditions par dissolution fractionnée en milieu nitrique.

Dans la pratique, différents galates de départ ont été utilisés de façon satisfaisante. A titre d'exemple, on mentionnera principalement des oxydes doubles choisis parmi $MgGa_2O_4$, $MnGa_2O_4$, $ZnGa_2O_4$, $FeGaO_3$, $Fe_{0,2}Ga_{1,8}O_3$, $Ga_4GeO_8$, $NiGa_2O_4$, $CuGaO_2$, $CuGa_2O_4$.

2

On précisera brièvement que les oxydes doubles précités sont préparés de façon traditionnelle, par exemple par voie sèche à partir des oxydes simples correspondants.

Selon une caractéristique additionnelle du procédé objet de la présente invention, l'oxynitrure séparé du milieu réactionnel est soumis à un traitement ultérieur de stabilisation par chauffage à une température de l'ordre de 200 à 300°C sous courant gazeux d'ammoniac.

De façon avantageuse, un tel traitement de stabilisation sera conduit immédiatement après obtention et séparation de l'oxynitrure. Ce traitement assure une parfaite réversibilité du capteur et, partant, une stabilisation de ses réponses. A la suite de ce traitement, on observe une légère augmentation de la résistance électrique des oxynitrures de gallium stabilisés. Cette élévation de la résistance peut être réduite de façon importante, lorsque l'on opère le traitement thermique immédiatement après l'obtention de l'oxynitrure.

Dans la pratique, on obtient une excellente stabilisation des oxynitrures de gallium selon l'invention. par mise en oeuvre d'un traitement thermique, entre 200 et 300°C, sous circulation d'un flux d'air ayant une concentration en $NH_3$ de l'ordre de 1500ppm.

Généralement, une durée de traitement thermique d'au moins environ 15 minutes s'avère suffisante. Toutefois, la durée exacte de ce traitement thermique peut quelque peu varier en fonction de la température et de la concentration en ammoniac du flux gazeux de traitement.

Ces nitrure et oxynitrures proposés possèdent une concentration en électrons de valence supérieure ou égale à 4 et présentent une structure tétraédrique dérivée de celle de la wurtzite avec occupation par le gallium de la moitié des sites tétraédriques du réseau anionique. De tels nitrure et oxynitrures se présentent sous la forme de poudres qu'il est possible de pastiller sous pression ou encore de déposer en couche épaisse.

Ces nitrure et oxynitrures peuvent donc être avantageusement utilisés pour la fabrication de dispositifs de détection sélective dans l'atmosphère de gaz réducteurs azotés et en particulier d'ammoniac ainsi que d'autres gaz contenant les groupements NH et/ou $NH_2$.

Conformément à la présente invention, un tel dispositif de détection comporte une couche semi-conductrice à base d'un tel nitrure ou oxynitrure placée sur un support muni d'un moyen de chauffage pouvant par exemple atteindre une température d'environ 250°C, ainsi qu'un moyen de mesure de la variation de la résistance de ladite couche en réponse à la chimisorption des gaz réducteurs azotés sur ladite couche, le moyen de mesure fournissant un signal représentatif de la variation de la concentration desdits gaz au voisinage de cette couche. En fonction des applications particulières envisagées, il pourra s'agir d'un signal sonore, lumineux, ou encore de l'affichage d'une teneur en gaz réducteurs azotés sur une échelle graduée par exemple directement en ppm d'ammoniac.

De tels dispositifs de détection sélective dans l'atmosphère de gaz réducteurs azotés trouvent par exemple leur application dans des installations frigorifiques équipées de seuils d'alarme. Il convient en effet de rappeler qu'actuellement une grande majorité des fluides frigorigènes utilisés sont constitués par de l'ammoniac.

De tels détecteurs trouvent également leur application dans l'industrie laitière, celle de l'acide nitrique et des engrais, les conserveries, les tanneries, les élevages et les abattoirs, où l'on opère la combustion des déchets animaux.

De tels dispositifs de détection trouvent également leur application dans le domaine de l'enrichissement des terres en azote par injection directe d'ammoniac. L'objet de la présente invention permet en outre d'assurer une surveillance de silos dans lesquels on réalise une complémentation azotée de l'alimentation du bétail, par exemple par injection d'ammoniac anhydre au moment du passage du maïs dans l'ensileuse. On précisera également que dans le domaine de l'agroalimentaire, l'ammoniac accompagne souvent d'autres polluants atmosphériques. La détection de l'ammoniac permet donc de prévenir non seulement l'apparition de ce gaz à des doses insupportables ou dangereuses, mais aussi celle de gaz d'accompagnement.

Diverses expérimentations ont été conduites pour vérifier les conditions de chimisorption et de désorption de l'oxygène ainsi que le domaine de températures optimales de réaction réversible de l'ammoniac avec l'oxygène adsorbé.

Les différentes propriétés caractéristiques des composés selon la présente invention sont globalement du même ordre que celles des oxydes doubles de la technique antérieure illustrée par FR-A-2 579 754.

Les courbes des figures annexées démontrent cependant clairement les améliorations décisives que présentent les composés selon l'invention par rapport à un oxyde double de zinc et de germanium selon l'art antérieur.

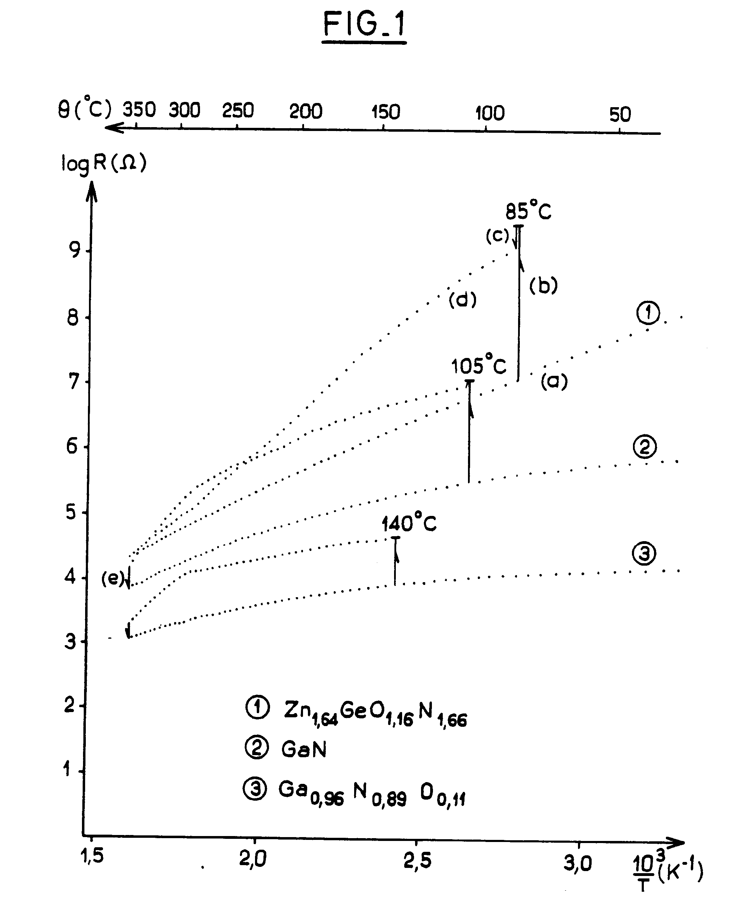

Sur les figures annexées, la figure 1 représente trois courbes comparatives illustrant les modifications de la conductibilité électrique de trois échantillons de nitrure et d'oxynitrures, sous l'effet de la chimisorption d'oxygène et de la désorption programmée en fonction de la température thermodynamique. Sur cette figure,

a) représente la courbe de référence Log Ro (1/T),
b) représente la chimisorption isotherme,
c) représente la désorption isotherme,

d) représente la courbe de désorption programmée en température 3K/min,

e) représente la désorption isotherme à 350°C.

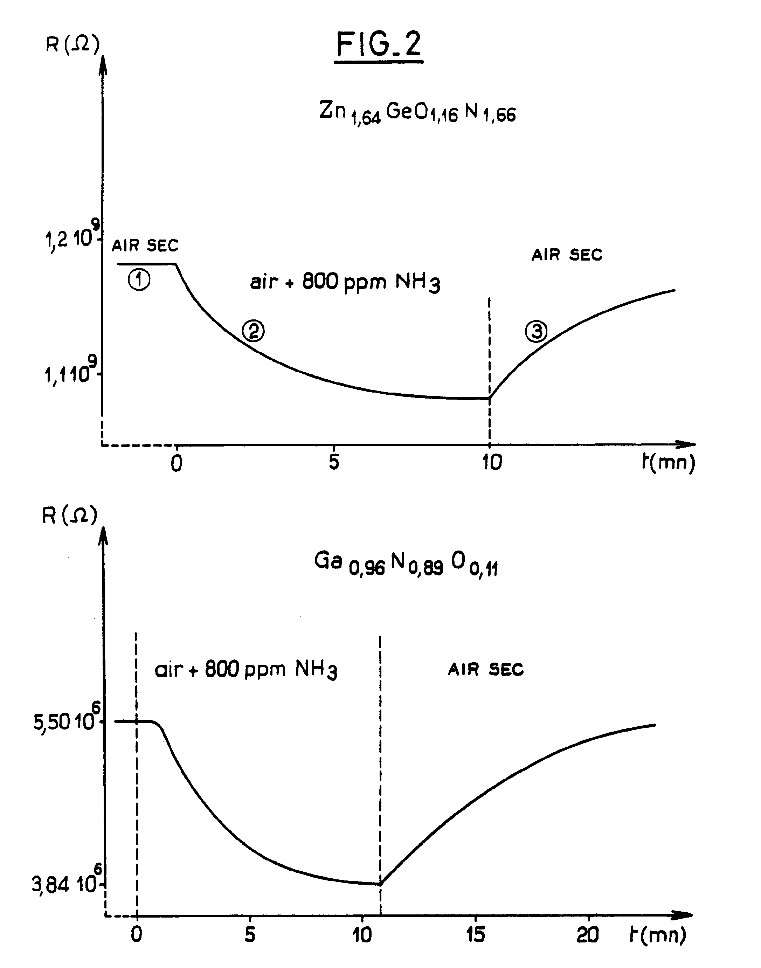

La figure 2 représente les variations de résistance d'oxynitrures par action d'ammoniac ; le diagramme supérieur correspond à un échantillon d'oxyde double de zinc et de germanium selon la technique antérieure précitée, et le diagramme inférieur est relatif à un échantillon d'oxynitrure de gallium objet de la présente demande.

L'analyse comparative des différents diagrammes des figures 1 et 2 annexées démontre clairement les améliorations consécutives à l'utilisation de nitrure ou d'oxynitrures de gallium selon l'invention.

On y relève en particulier une diminution très notable, environ trois ordres de grandeurs, de la résistance des composés objet de la présente demande.

On relève également sur la figure 1 une très forte diminution de la pente des courbes de variation de la résistance en fonction de la température.

Ces expérimentations démontrent donc clairement l'intérêt des composés objet de la présente demande. Ils permettent notamment une réalisation beaucoup plus aisée de capteurs sélectifs de gaz. En effet, d'une part, les résistances plus faibles sont plus faciles à mesurer et, d'autre part, les très faibles variations de résistance électrique en fonction de la température ne nécessitent pas une régulation très précise de la température d'utilisation de ces capteurs.

On mentionnera, ci-après, à titre d'illustration, quelques exemples particuliers de préparation de composés selon l'invention.

A une température de 580°C, on fait réagir pendant plusieurs jours de l'ammoniac sur du gallate de nickel $NiGa_2O_4$. Cette réaction conduit à un mélange d'un alliage $Ni_3Ga$ et d'un oxynitrure de gallium, de couleur noire. La séparation est effectuée par dissolution fractionnée en milieu nitrique N/10. Le résidu de couleur jaune, repris par l'alcool absolu, est séché à 20°C sous vide. L'analyse du produit obtenu, symbolisé par X, donne les résultats suivants :

Ga : 82,6 %

N : 15,5 %

Ga/N : 1,07%

Compte-tenu de la précision des dosages, on en déduit par différence un taux d'oxygène compris entre 1 et 2,5%.

En fonction de la nature des gallates de départ et des conditions expérimentales, on obtient les produits mentionnés dans le tableau I ci-après.

## TABLEAU I

| OXYDE DOUBLE | TEMPERATURE DE REACTION | PRODUIT DE REACTION |
|---|---|---|
| $MgGa_2O_4$ | 900 | $GaN + MgO$ |
| $MnGa_2O_4$ | $\begin{cases} 800 \\ 950 \end{cases}$ | $GaN + MnO$<br>$GaN + Mn_6N_5$ |
| $ZnGa_2O_4$ | 600 | $X + Zn$ |
| $FeGaO_3$ | 800 | $GaN + Fe_3N$ |
| $Fe_{0,2}Ga_{1,6}O_3$ | 750 | $X + Fe_3N$ |
| $Ga_4GeO_8$ | 750 | $GaN + Ge_3N_4$ |
| $NiGa_2O_4$ | $550 < t < 650$ | $X + Ni_3Ga$ |
| $CuGaO_2$ | 500-550 | $X + Cu$ |
| $CuGa2O_4$ | 500-550 | $X + Cu$ |

Le titre en azote est déficitaire par rapport à celui du nitrure de GaN dont les teneurs calculées sont : Ga% : 83,27 ; N% : 16,73. Sa valeur s'accorde avec celle qu'on déduit de l'augmentation de masse lors de la réaction de X avec l'oxygène.

Le diagramme de poudre de X est comparable à celui du nitrure GaN ; on y trouve aux mêmes angles de diffraction toutes les réflexions propres à ce dernier, mais les intensités relatives sont très différentes. On observe en outre trois réflexions supplémentaires de faible intensité.

On indexe l'ensemble du diagramme avec une maille hexagonale de paramètres : $a = a_o = 3,18_6$Å ; $c = 3c_o = 3 \times 5,17_6$Å $= 15,5_6$Å. $a_o$ et $c_o$ sont les paramètres de GaN ; toutes les réflexions restent ainsi compatibles avec le groupe spatial $P6_3mc$ de la wurtzite.

La comparaison des diagrammes de poudre de la phase X et de GaN montre que toutes les réflexions spécifiques ou d'intensité exaltée dans X sont compatibles avec une maille cubique de type sphalérique (G. S. : $F\bar{4}3m$) de paramètre : $a' = a_o\sqrt{2} = 5,50_6$Å (voir tableau II ci-après).

La phase X n'est pas un mélange contenant du nitrure de gallium car elle se dissout totalement dans les acides concentrés et chauds où GaN reste inerte. Il s'agit donc d'un polytype dans lequel coexistent les deux types d'empilement compacts, hexagonal et cubique à faces centrées.

Pour conserver une concentration en électrons de valence égale à 4, condition d'existence d'une structure tétraédrique, on doit formuler X comme suit :

$$Ga_{1-\frac{x}{3}} \square_{\frac{x}{3}} N_{1-x} O_x$$

L'analyse chimique donne dans cet exemple particulier
$$x = 0,09_5.$$

## TABLEAU II

| | Phase X | | | | GaN |
|---|---|---|---|---|---|
| d(A) | hkl $a=3{,}18_6$Å $c=15{,}53$Å | $I/I_o$ | hkl $a'=4{,}50_5$Å | $I/I_o$ | hkl $a_o=3{,}18_6$Å $c_o=5{,}17_8$Å |
| 2,76 | 1 0 0 | 43 | — | 48 | 1 0 0 |
| 2,59 | 0 0 6 | 100 | 1 1 1 | 50 | 0 0 2 |
| 2,43 | 1 0 3 | 80 | — | 100 | 1 0 1 |
| 2,25 | 1 0 4 | 10 | 2 0 0 | — | — |
| 1,884 | 1 0 6 | 8 | — | 16 | 1 0 2 |
| 1,591 | 1 1 0 | 45 | 2 2 0 | 29 | 1 1 0 |
| 1,461 | 1 0 9 | 14 | — | 28 | 1 0 3 |
| 1,382 | 2 0 0 | 4 | — | 4 | 2 0 0 |
| 1,357 | 1 1 6 | 36 | 3 1 1 | 24 | 1 1 2 |
| 1,333 | 2 0 3 | 10 | — | 13 | 2 0 1 |
| 1,295 | 0 0 12 | 6 | 2 2 2 | 3 | 0 0 4 |
| . | | | | | |
| . | | | | | |
| 1,125 | 2 0 8 | <1 | 4 0 0 | — | — |
| . | | | | | |
| 1,034 | 2 1 2 | 2 | 3 3 1 | — | — |

On précisera enfin qu'en agissant sur la durée de réaction, on peut modifier les proportions relatives des différents éléments composant les oxynitrures de gallium selon l'invention. Ainsi, à partir du même gallate de nickel, la réaction avec l'ammoniac à 580°C conduit aux oxynitrures suivants, en fonction du temps de réaction :

| | | Ga | N | O |
|---|---|---|---|---|
| 6 JOURS | : | 0,951 | 0,854 | 0,146 |
| 8 JOURS | : | 0,963 | 0,888 | 0,112 |
| 12 JOURS | : | 0,931 | 0,792 | 0,208 |

## Revendications

1. Utilisation à titre de détecteurs sélectifs de gaz réducteurs azotés dans l'atmosphère, en particulier d'ammoniac et de gaz contenant des groupements NH et/ou $NH_2$, du type à résistance semi-conductrice, d'un nitrure et d'oxynitrures de gallium à structure tétraédrique répondant à la formule générale :

$$Ga_{1-\frac{x}{3}} \square_{\frac{x}{3}} N_{1-x} O_x$$

dans laquelle :
□ représente une lacune, et $O \leqq x \leqq O,3$

2. Procédé de préparation de nitrure et oxynitrures de gallium, tels que définis à la revendication 1, caractérisé en ce que l'on fait réagir un oxyde de gallium avec de l'ammoniac à une température supérieure à environ 550°C.

3. Procédé selon la revendication 2, caractérisé en ce que l'on fait réagir $Ga_2O_3$ avec de l'ammoniac à une température s'échelonnant environ entre 550°C et 900°C, et en ce que l'on sépare du milieu réactionnel le nitrure obtenu.

4. Procédé selon la revendication 2, caractérisé en ce que l'on fait réagir un gallate avec de l'ammoniac à une température sensiblement comprise entre 550°C et 650°C, et en ce que l'on sépare du milieu réactionnel l'oxynitrure obtenu.

5. Procédé selon la revendication 4, caractérisé en ce que le gallate est un oxyde double choisi parmi $MgGa_2O_4$, $MnGa_2O_4$, $ZnGa_2O_4$, $FeGaO_3$, $Fe_{0,2}Ga_{1,8}O_3$, $Ga_4GeO_8$, $NiGa_2O_4$, $CuGaO_2$, $CuGa_2O_4$.

6. Procédé selon l'une des revendications 4 et 5, caractérisé en ce que l'oxynitrure obtenu est séparé du milieu réactionnel par dissolution fractionnée en milieu nitrique.

7. Procédé selon l'une des revendications 4 à 6, caractérisé en ce que l'on soumet l'oxynitrure à un traitement ultérieur de stabilisation par chauffage à une température de l'ordre de 200°C à 300°C, sous courant gazeux d'ammoniac.

8. Procédé selon la revendication 7, caractérisé en ce que le traitement de stabilisation est effectué immédiatement après l'obtention et la séparation de l'oxynitrure à partir du milieu réactionnel.

9. Dispositif de détection sélective dans l'atmosphère de gaz réducteurs azotés, en particulier d'ammoniac et de gaz contenant des groupements NH et/ou $NH_2$, caractérisé en ce qu'il comporte une couche semi-conductrice à base d'un nitrure ou oxynitrure selon la revendication 1 placé sur un support muni d'un moyen de chauffage, et un moyen de mesure de la variation de la résistance de ladite couche en réponse à la chimisorption des gaz réducteurs azotés sur ladite couche, le moyen de mesure fournissant un signal représentatif de la variation de la concentration desdits gaz au voisinage de ladite couche.

## Patentansprüche

1. Verwendung eines Nitrids und von Oxynitriden von Gallium mit tetraedrischer Struktur, entsprechend

EP 0 370 848 B1

der allgemeinen Formel

$$Ga_{1-\frac{x}{3}} \quad \square_{\frac{x}{3}} \quad N_{1-x} \quad O_x$$

worin

$\square$ eine Störstelle bedeutet und $0 \leqq x \leqq 0{,}3$ ist, als selektive Detektoren für stickstoffhaltige reduzierende Gase in der Atmosphäre, insbesondere für Ammoniak und die Gruppen NH und/oder $NH_2$ enthaltendes Gas, vom Typ der Halbleiter-Widerstände.

2. Verfahren zur Herstellung von Nitrid und Oxynitriden von Gallium, wie in Anspruch 1 definiert, dadurch gekennzeichnet, daß man ein Oxid von Gallium mit Ammoniak bei einer Temperatur über etwa 550° C umsetzt.

3. Verfahren nach Anspruch 2, dadurch gekennzeichnet, daß man $Ga_2O_3$ mit Ammoniak bei einer Temperatur, die sich etwa von 550° C bis 900° C erstreckt, umsetzt, und daß man aus dem erhaltenen Reaktionsmedium das Nitrid abtrennt.

4. Verfahren nach Anspruch 2, dadurch gekennzeichnet, daß man ein Gallat mit Ammoniak bei einer Temperatur von 550° C bis 650° C umsetzt, und daß man das erhaltene Oxynitrid aus dem Reaktionsmedium abtrennt.

5. Verfahren nach Anspruch 4, dadurch gekennzeichnet, daß das Gallat ein Doppeloxid ist, ausgewählt aus $MgGa_2O_4$, $MnGa_2O_4$, $ZnGa_2O_4$, $FeGaO_3$, $Fe_{0{,}2}Ga_{1{,}8}O_3$, $Ga_4GeO_8$, $NiGa_2O_4$, $CuGaO_2$, $CuGa_2O_4$.

6. verfahren nach einem der Ansprüche 4 und 5, dadurch gekennzeichnet, daß das erhaltene Oxynitrid aus dem Reaktionsmedium durch fraktioniertes Auflösen in einem salpetersäurehaltigen Medium abgetrennt wird.

7. Verfahren nach einem der Ansprüche 4 bis 6, dadurch gekennzeichnet, daß man das Oxynitrid einer weiteren Stabilisierungsbehandlung durch Erhitzen auf eine Temperatur in der Größenordnung von 200° C bis 300° C unter einem Ammoniakgasstrom unterzieht.

8. Verfahren nach Anspruch 7, dadurch gekennzeichnet, daß die Stabilisierungsbehandlung unmittelbar nach der Herstellung und der Abtrennung des Oxynitrids aus dem Reaktionsmedium durchgeführt wird.

9. Vorrichtung zur selektiven Feststellung von reduzierendem stickstoffhaltigem Gas in der Atmosphäre, insbesondere von Ammoniak und die Gruppen NH und/oder $NH_2$ enthaltendem Gas, dadurch gekennzeichnet, daß sie eine Halbleiterschicht auf der Basis eines Nitrids oder Oxynitrids nach Anspruch 1 auf einem Träger, der eine Einrichtung zum Erwärmen aufweist, und eine Einrichtung zur Messung der Änderung des Widerstands dieser Schicht als Reaktion auf die Chemisorption von stickstoffhaltigen reduzierenden Gasen an der Schicht, umfaßt, wobei die Meßeinrichtung ein Signal liefert, das repräsentativ für die Änderung der Konzentration der genannten Gase in der Nähe der Schicht ist.

## Claims

1. Use by way of selective detectors of nitrogenous reducing gases in the atmosphere, especially of ammonia and of gases containing NH and/or $NH_2$ groups, of the semiconductor resistance type, the gallium nitride and oxynitrides of tetrahedral structure according to the general formula:

$$Ga_{1-\frac{x}{3}} \quad \square_{\frac{x}{3}} \quad N_{1-x} \quad O_x$$

in which:

$\square$ represents a hole, and $O \leqq x \leqq 0.3$.

2. A process for the preparation of gallium nitride and oxynitrides, as defined in claim 1, wherein a gallium oxide is reacted with ammonia at a temperature exceeding approximately 550°C.

3. The process as claimed in claim 2, wherein $Ga_2O_3$ is reacted with ammonia at a temperature approximately within the range between 550°C and 900°C, and wherein the nitride obtained is separated from the reaction medium.

4. The process as claimed in claim 2, wherein a gallate is reacted with ammonia at a temperature substantially within the range between 550°C and 650°C, and wherein the oxynitride obtained is separated from the reaction medium.

8

5. The process as claimed in claim 4, wherein the gallate is a double oxide selected from among $MgGa_2O_4$, $MnGa_2O_4$, $ZnGa_2O_4$, $FeGaO_3$, $Fe_{0,2}Ga_{1,8}O_3$, $Ga_4GeO_8$, $NiGa_2O_4$, $CuGaO_2$, $CuGa_2O_4$.

6. The process as claimed in one of claims 4 and 5, wherein the oxynitride obtained is separated from the reaction medium by fractional dissolving in a nitric acid medium.

7. The process as claimed in one of claimed 4 to 6, wherein the oxynitride is subjected to a subsequent treatment of stabilization by heating to a temperature in the order of 200°C to 300°C, under a gas current of ammonia.

8. The process as claimed in claim 7, wherein the stabilization treatment is effected immediately after the production and the separation of the oxynitride from the reaction medium.

9. A device for the selective detection, in the atmosphere, of nitrogenous reducing gases, especially of ammonia and of gases containing NH and/or $NH_2$ groups, which comprises a semiconductor layer based on a nitride or oxynitride as claimed in claim 1, placed on a support equipped with a heating means, and a means for the measurement of the variation of the resistance of said layer in response to the chemisorption of the nitrogenous reducing gases on said layer, the measuring means supplying a signal representative of the variation of the concentration of said gases in the vicinity of said layer.

# FIG_1

FIG.2